# EUROPEAN PATENT SPECIFICATION

(11) **EP 2 363 020 B1**
(45) Date of publication and mention of the grant of the patent: **10.04.2013**
(21) Application number: 11250133.3
(22) Date of filing: 04.02.2011
(51) Int. Cl.: A01K 5/015, A23K 1/00, A23K 1/02, A23K 1/16, B65D 5/02, B65D 5/18, B65D 5/42, B65D 5/66, B65D 77/04, B65D 77/20, B65D 5/06, B65D 5/20, B65D 5/40, B65D 5/44, B65D 5/50, B65D 65/46

(54) **Animal feed supplements**
Tierfutterergänzungsmittel
Suppléments d'aliments pour animaux

(30) Priority: 06.02.2010 GB 201001969
(43) Date of publication of application: 07.09.2011
(73) Proprietor: Rumenco Limited, Burton-on-Trent, Staffordshire DE13 0DW (GB)
(72) Inventor: Hunter, Grant James, Burton-on-Trent Staffordshire DE13 0DW (GB)
(74) Representative: Sales, Robert Reginald

(56) References cited:
- WO-A1-80/00401
- AU-A4- 2005 100 982
- FR-A1- 2 786 066
- US-A- 4 027 043
- US-A- 4 148 429
- US-A- 4 431 675
- US-A- 4 803 085
- US-B1- 6 777 019

## Description

The present invention relates to animal feed supplements, and particularly but not exclusively to their packaging, and methods of manufacturing animal feed supplements.

Conventionally, the diets of forage fed animals such as ruminants, for example cattle and sheep typically include grazing, hay, grass silage, cereal silage and straw. Such forage may not provide the animals with all their specific nutrient requirements, and so feed supplements are often provided to such animals.

Feed supplements are often provided as a substantially solid block which can be licked by an animal. Typically such blocks comprise a nutritive carrier, such as molasses, which acts as a vehicle for one or more active ingredients such as proteins, fats, oils, minerals and vitamins. The characteristics of the supplement, for example its physical hardness and the concentration of the active ingredients, are selected to control the amount of the active ingredients which are ingested by an animal as the animal licks the supplement.

Feed supplement blocks are typically manufactured by one or more of pressing, cooking and poured chemical hardening. Pressed feed blocks are typically manufactured by compressing mixtures of molasses and dry feed ingredients with a binding agent. Cooked blocks generally involve heating molasses to evaporate the moisture content, creating a viscous candy-like substance which is blended with dry ingredients and allowed to cool, resulting in a solidified product. Poured chemical hardened blocks generally include specific feed ingredients which initiate a gelling reaction in the presence of a molasses to produce a solidified product. The reaction is typically exothermic, resulting in the product curing under the heat of reaction, although that is not always the case.

It will be appreciated that solid feed supplements generally begin life as a substantially liquid product. Feed supplements are therefore generally produced in a container or mould in which liquid product is poured, and allowed to harden. Such containers are typically made of metal or plastic. The set or hardened product may then be supplied to an animal or animals in the container, which is discarded after the feed supplement has been consumed.

Documents WO80/00401 A1 (D1), AU2005100982A4 (D2), US4027043A (D3), US4803085A (D4), US4431675A (D5), and US6777019B1 (D6) all disclose animal feed supplements. US4148429A (D7) discloses a single piece blank used, for example, for solidification of food materials.

According to a first aspect of the present invention there is provided an animal feed supplement as claimed in claim 1.

As the support structure is edible, that is, suitable for animal consumption, the entire animal feed supplement can be consumed, leaving little or substantially no waste. Such a feed supplement may be shaped to fit inside a container, so as to provide a refill for that container.

The substantially solid block of feed supplement material may be formed around the edible support structure, or around one or more key portions of the edible support structure. The block of feed supplement material may be substantially integral with the edible support structure.

The substantially solid block of feed supplement material may comprise molasses and one or more additional nutrients, as discussed above.

The edible support structure may comprise a case inside which the block of feed supplement material is located or held. Preferably, feed supplement material is poured into the case in a liquid form, and sets inside the case to form the solid block. The case may comprise a liner for a container.

The case may comprise one or more key portions, for example in the form of folds or flutes, which extend into a body portion of the block of feed supplement material, such that the block of feed supplement material may be formed around the key portions.

The edible support structure may strengthen the feed supplement, for example many provide rigidity to the supplement, or may reduce the overall plasticity of the supplement. For example, the support structure may increase the ability of the feed supplement (in comparison with an unsupported block of feed supplement material) to withstand pressure applied in a stacking direction, e.g. normal to a surface of the animal feed supplement. The edible support structure may increase the ability of the feed supplement to retain its shape under variations, for example increases, in temperature and/or humidity.

The edible support structure may be derived from wood pulp, and may comprise for example cardboard, paper, fibreboard, or paperboard. Preferably the edible support structure is produced using the kraft process. Preferably the edible support structure comprises corrugated cardboard having a thickness of between 1 and 2mm, and preferably of between 1.25 and 1.5mm. Preferably the edible support structure comprises cardboard having a grade of 125 E, where E refers to the shape of the wave or flute between the upper and lower board layers, as is conventional.

The animal feed supplement may comprise a lid portion, which in use covers at least a portion, for example a border portion, of an upper surface of the block of feed supplement material. The lid portion may provide a base onto which another feed supplement may be stacked. The lid portion may comprise the same material as the edible support structure. The lid portion may border the upper surface and may be, for example, substantially annular in shape. The lid portion may be removable, eg tearable.

According to a second aspect of the invention there is provided a method of manufacturing an animal feed supplement as claimed in claim 8.

The animal feed supplement may be as described in the first aspect of the invention.

The method may include the step of locating the edible support structure inside the mould. The method may include the step of discharging an animal feed supplement comprising the block of feed supplement material and the edible support structure from the mould.

The method may also include the step of assembling the edible support structure from a blank. The step of assembly may comprise the step of folding the blank along predefined fold lines.

The blank may be arranged to assemble into a case having a base and at least one wall defining an interior. The blank may further comprise a first portion arranged in use to extend over/cover at least a portion of the interior of the assembled case.

The present invention will now be described, by way of example only, with reference to the accompanying drawings, in which:
Figure 1 is a plan view of an edible support structure blank;
Figure 2 is a perspective view of a folded edible support structure;
Figure 3 is a perspective view of the edible support structure during insertion into a mould;
Figure 4 is a perspective view of a packaging component;
Figure 5 is a perspective view similar to that of Figure 3, showing an edible support structure assembled with the packaging component of Figure 4 during insertion into a mould;
Figure 6 shows a detail of Figure 5;
Figure 7 shows a mould comprising an edible support structure after the mould has been charged with animal feed material;
Figure 8 shows an animal feed supplement removed from a mould;
Figure 9 shows a pallet of stacked animal feed supplements;
Figures 10, 11 and 12 show an animal feed supplement during various stages of use;
Figure 13 is a perspective view of another edible support structure blank;
Figure 14 shows the edible support structure of Figure 13 assembled;
Figure 15 is a perspective view of an animal feed supplement comprising the edible support structure of Figures 13 and 14;
Figure 16 is a top view of another edible support structure inside a mould;
Figure 17 is a plan view of yet another edible support structure blank;
Figures 18 and 19 both show a perspective view of the edible support structure of Figure 17 inside a mould;
Figure 20 shows the edible support structure of Figures 17 to 19 charged with animal feed material;
Figure 21 shows an animal feed supplement; and
Figure 22 is flow diagram representing a method of manufacturing an animal feed supplement.

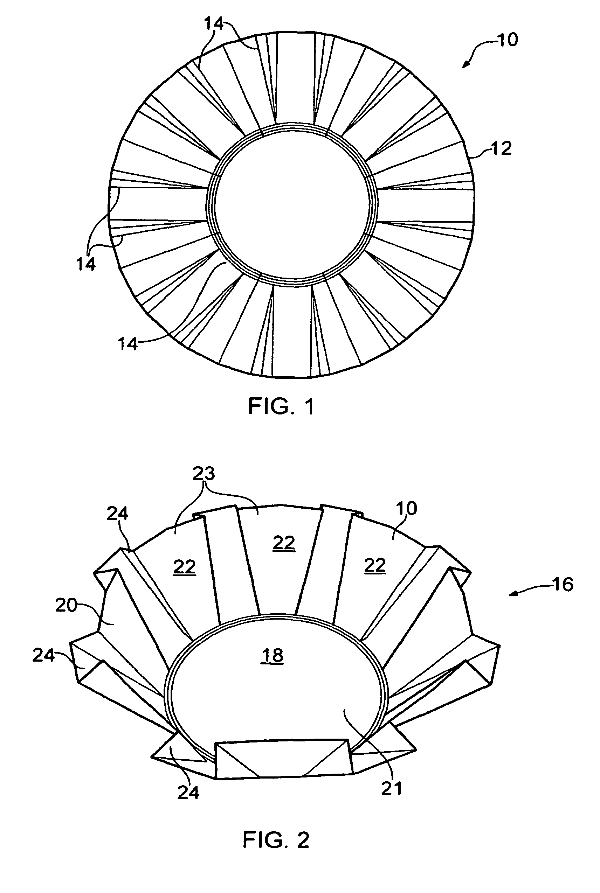

Referring firstly to Figures 1 to 3, an edible support structure 10 for an animal feed supplement is shown. From Figure 1 it will be seen that the edible support structure 10 comprises a substantially circular blank 12 which is shaped to assemble into an edible support structure 10 arranged to fit inside a mould for an animal feed supplement.

The blank 12 comprises a single piece of sheet material having a plurality of fold lines 14, marked in this example by perforations or scoring. When folded along the fold lines 14, the blank assembles into an edible support structure 10 in the form of a folded case 16.

The case 16 comprises a base 18 and an upstanding wall 20 surrounding the base. In this example, the case has a substantially frusto-conical shape, which shape can be easily fitted into a mould, so as to substantially line the mould.

The wall 20 and base 18 together bound an interior 21, into which in use a material, such as an animal feed material, can be poured or otherwise placed. In the examples discussed herein a flowable molasses-based animal feed material is used, although any other settable animal feed material could be used if desired.

The upstanding wall 20 of the case 16 comprises at least one fluted or folded portion 22, and in this case, a plurality of such fluted portions. The fluted portions each have an interior face 23 and two side faces 24. The size and number of the flutes at least partly depends on the shape of the mould into which the case is to be inserted. For example, if the angle between a base and a wall of the mould is steep, for example 90°, more flutes may be required than for a mould having a shallower angle (for example 45°) between the base and its wall. It will be appreciated that the skilled man could adjust the number of flutes as required when putting the invention into practice.

In use, the blank 12 is assembled into an edible support structure 10 by folding the blank along the fold lines 14. Folding may be performed by hand or automatically, such as by a preforming machine. The assembled edible support structure 10 is then located inside a mould. The mould comprising the edible support structure is then charged with a predetermined amount of a settable animal feed supplement material. That settable material is then allowed to set, or caused to set, in a known way, until the feed supplement material forms a substantially solid block. An animal feed supplement comprising the block of feed supplement material and the edible support structure is then discharged from the mould. The mould can then be used again to form further animal feed supplements.

It will be appreciated that each fluted portion 22 extends part way into the interior of the case. In use, this increases the surface area of the case which is in contact with the animal feed material poured into the case. In addition, the material poured into the case will flow around the fluted portions 22. The wedge shape of those fluted portions keys into the animal feed material when it sets. Both of these factors contribute to an edible support structure which resists removal from the set animal feed material, resulting in animal feed supplement comprising a block of feed material and a substantially integral edible support structure.

The edible support structure is formed of a different material to the animal feed material, and does not necessarily comprise 'food': it is edible in that it is suitable for consumption by animals, and can be consumed by an animal simultaneously with the feed supplement material. In this example, the edible support structure is produced from corrugated cardboard having a grade of 125 E. The cardboard is made from kraft material, and the adhesive used to bond the outer board to the inner flute is wheat starch.

Whilst other grades of cardboard can be used, we have determined that when the cardboard is too thin the resulting animal feed supplement may be unstable. However, when the cardboard used is too thick, it may not be fully consumed by the animals when supplement is in use. In addition, the thicker the cardboard, the more difficult it may be to fold the blank.

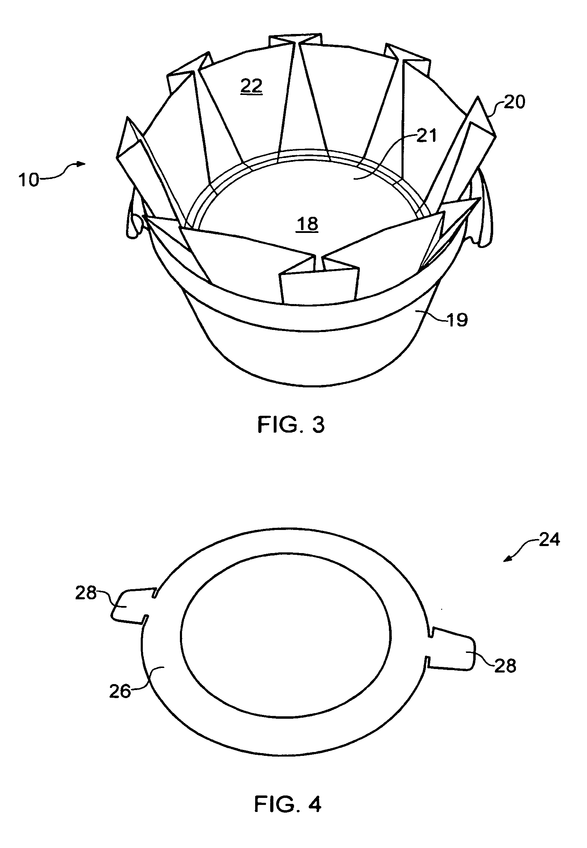

Referring now to Figures 4 to 8, another edible support structure is described. The edible support structure is substantially identical to that of Figures 1 to 3, with the addition of an extra packaging component, as illustrated in Figure 4, in the form of a lid portion 24.

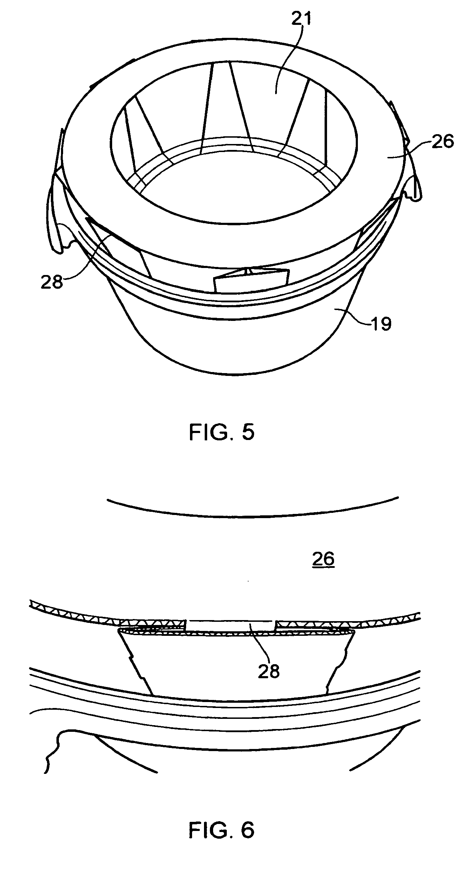

The lid portion 24, referred to herein as a splash ring, comprises a substantially circular ring of cardboard 26 having two tab portions 28. The circular ring 26 is shaped to fit on top of the edible support structure 10, when it is in a mould 19. In this example, the tab portions 28 are shaped to slot between two of the fluted portions 22, as shown in Figure 5, and in more detail in Figure 6, to in use hold the ring 26 in place.

As its name suggests, the splash ring in use acts to keep an animal feed material poured into a mould including the edible support structure inside the interior 21 of the edible support structure 10, and to reduce the likelihood of the feed material splashing out of the interior 21 and onto the mould, which might cause the finished product to stick inside the mould. The splash ring also provides a consistent surface on top of the feed material on to which another animal feed supplement might be stacked, increasing the stability of the finished product.

In use, the edible support structure 10 and splash ring 24 are located inside a mould 19, and the mould is then charged with a settable animal feed material. The animal feed material may range from being substantially liquid, for example, or may comprise of a thicker consistency flowable material.

The mould is charged with a predetermined amount of settable animal feed material, for example filled to a level just below the top of the edible support structure, or just below the splash ring. The settable animal feed material is then allowed to set, or action is taken to cause the animal feed material to set. For example the mould comprising the animal feed material and the edible support structure may be placed in a temperature controlled area to allow the settable animal feed material to cure into a substantially solid block.

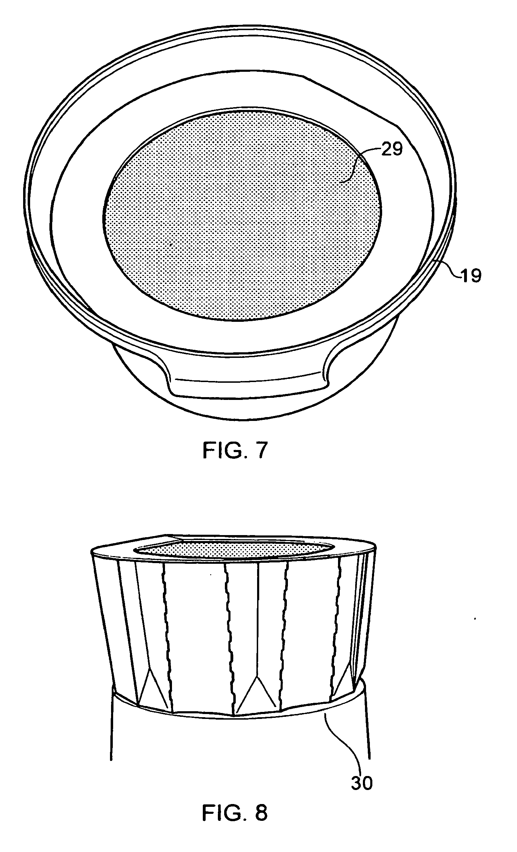

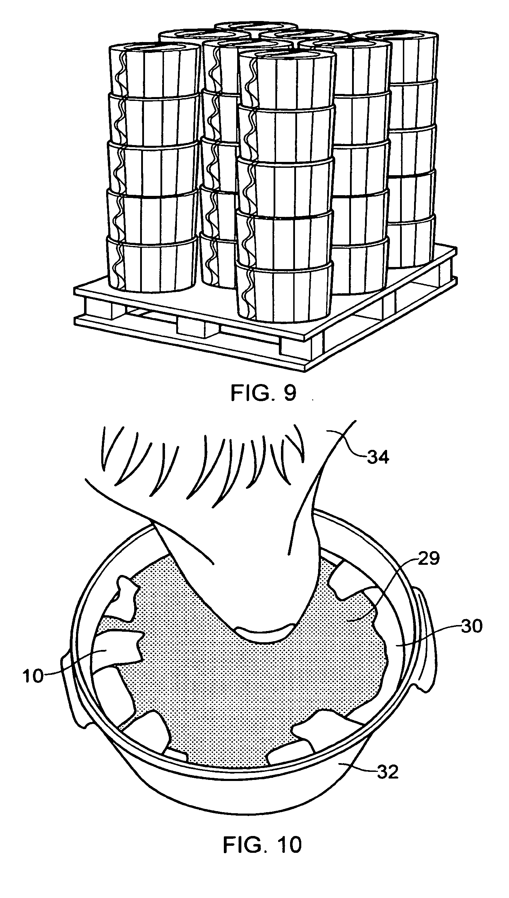

Once the animal feed material has set, an animal feed supplement 30 comprising a block of feed material 29 and the edible support structure is then removed or discharged from the mould, as shown in Figure 8. The animal feed supplement 30 is then ready for consumption by an animal. Such a supplement might be shrink-wrapped and loaded onto a pallet for storage and/or transportation, as shown in Figure 9.

In use, the lid portion extends over a border portion of an upper surface of the feed material, and provides a level base onto which other feed supplements may be stacked.

Figures 10 to 12 show an animal feed supplement during various stages of consumption. In use, the animal feed supplement 30 might be provided to an animal or group of animals in a container 32. That container 32 may have the same shape as the mould 19, and may previously have held an animal feed supplement. Thus the animal feed supplement 30 provides a refill for the container.

The lid portion may be easily removed from the supplement by tearing the annular ring away from the tabs and can be disposed of as cardboard for recycling.

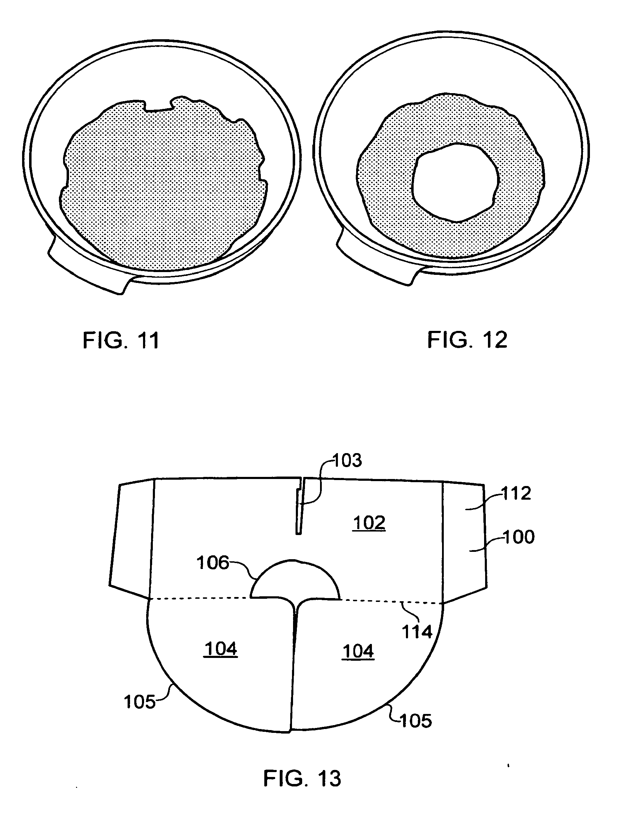

In Figure 10 an animal 34 can be seen consuming a portion of the animal feed supplement 30. Portions of the partially consumed edible support structure 10 can be seen at the edges of the feed supplement 30. In Figures 11 and 12 it can be seen that the edible support structure 10 has been consumed simultaneously with the feed material 29, at substantially the same rate as the feed material 29 such that little or none of the edible support structure remains once the feed supplement 30 has been consumed. The 20 empty container can then be cleaned and used again to hold further refills, if required.

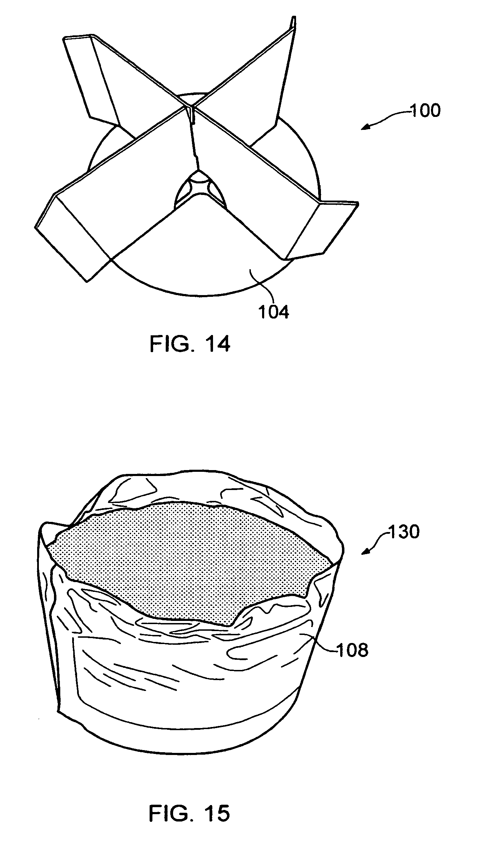

With reference to Figures 13 and 14, an alternative edible support structure 100 will now be described.

Figure 13 shows a blank, which when assembled comprises a portion of an edible support structure 100 which is shaped to fit into a mould for an animal feed supplement. The blank comprises a wall 102 having a central slot 103. The wall also comprises two base sections 104 separated from the major portion of the wall 102 by fold lines or perforations 114. The base sections 104 each have a curved outer edge 105, which in this example is shaped to co-operate with the plan shape of the base of the mould into which the edible support structure is to be inserted. Each wall further comprises one or more cut-out sections 106 at the base of the wall.

As before, the blank comprises corrugated cardboard having a grade of 125, although with flute pattern B rather than E.

In use, two blanks of are assembled into an edible support structure having the form of a cross, by aligning the slots of the two blanks, and slotting the wall of one blank over the wall of another blank. The base portions 104 are then folded substantially at right angles to their respective wall 102, each base portion of the wall being folded in an opposite direction so that, when correctly assembled, the edible support structure comprises four regions, and each region bounded by two walls 102 of the cross, and by a base portion 104, as shown in Figure 14. The four regions are in fluid communication by means of the cut-out sections 106 in the walls.

The assembled edible support structure 100 is placed inside a mould (not shown). To assist in removing the finished product from the mould an edible liner 108 is also located in the mould (either before, after, or substantially simultaneously with the edible support structure), such that no or little animal feed material comes into direct contact with the mould when it is poured into the mould.

A settable animal feed material is then poured into the mould and allowed to set, in the same way as discussed above. The feed material presses down on the base portions of the support as it is poured into the mould, so that the weight of the feed material holds the support in place. The feed material flows around the walls of the support structure substantially entirely enclosing them. The feed material is able to flow between the four regions of the support through the cut-out portions, ensuring that the regions are all filled substantially evenly. Although it is not shown, it will be appreciated that a lid portion of the type shown in Figure 4 might be provided if required.

When the animal feed material has set around the support structure, an animal feed supplement 130 comprising a block of feed supplement material and an edible support structure can be removed from the mould.

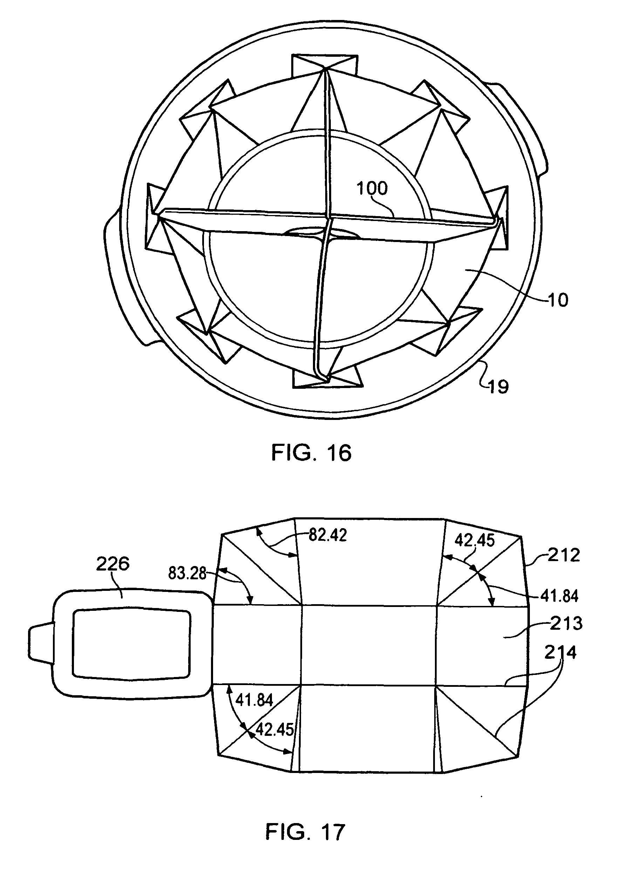

In this example, the edible liner 108 comprises thin paper, for example kraft brown parcel paper having a thickness of 0.14 mm. It will be appreciated that an alternative edible liner might be used. For example, Figure 16 shows the cross-like edible support structure 100 located inside the case-like edible support structure 10, which acts as this instance as the liner, as well as providing additional support. In such an embodiment both support structures 10 and 100 might be constructed from a thinner grade cardboard.

It will be noted that the edible support structures discussed so far have been designed for a circular mould. However, it will be appreciated that in edible support structure could be designed to fit any shape of mould.

For example, there is shown in Figures 17 to 21 an edible support structure 200 and resulting animal feed supplement 230 formed in a mould having a substantially rectangular plan.

Referring to Figure 17, a blank 212 for an edible support structure 200 is shown. The blank 212 comprises a single piece of sheet material having a major portion 213 which is substantially rectangular in plan, and comprises a plurality of fold lines 214 marked on the blank, for example by perforations or scoring. The blank further comprises a lid portion, or splash ring, 226, which in this example is cut from the same sheet material as the major portion of the blank. When folded along the fold lines 214, the blank 212 assembles into an edible support structure 200 comprising an integral splash ring 226. It will be appreciated that the splash ring might be provided separately, or not at all, if required.

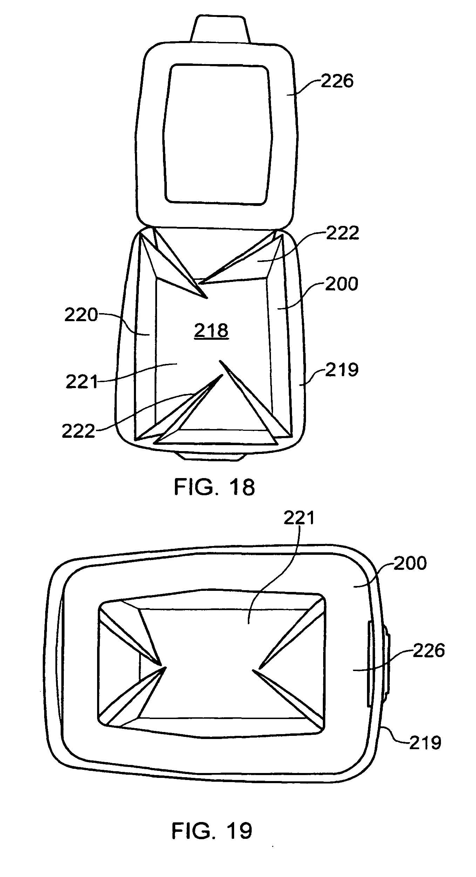

Referring to Figures 18 and 19, an edible support structure 200 is shown located in a mould 219. The edible support structure 200 comprises a substantially rectangular open-ended box having a base 218 bounded by an upstanding wall 220. Together, the upstanding wall and the base define an interior 221 into which an animal feed material can be poured in use.

It will be seen that the edible support structure comprises a least one, and preferably a plurality, in this case four, key portions 222 formed from folds in the blank. Each key portion 222 extends into the interior of the support structure 200, such that in use a settable animal feed material poured into the interior 221 of the edible support structure substantially surrounds the key portions. As discussed above, the key portions increase a surface area of the support structure that is in contact with the feed material (as compared with a cuboid liner), and also key into and bind with the feed material to resist removal of the feed material from the support structure. The splash ring 226 is folded down to fit inside the top of the mould, as shown in Figure 19.

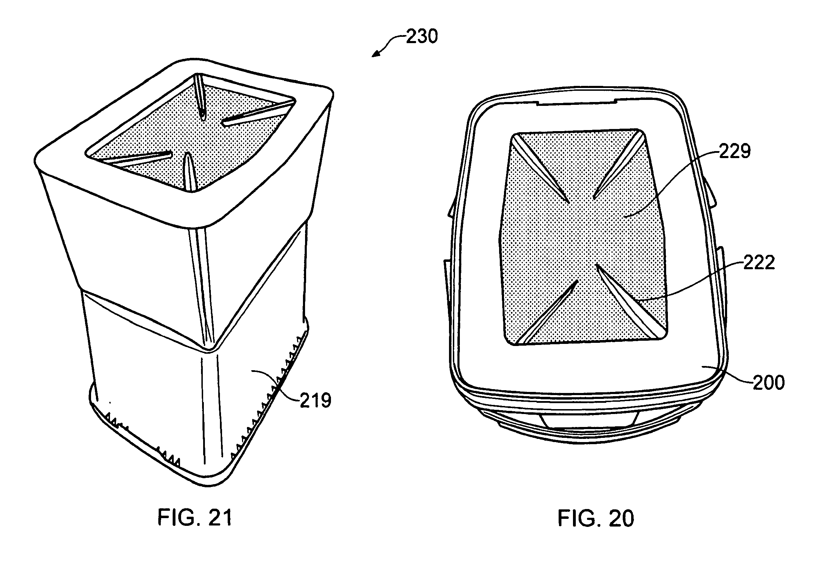

In use, an animal feed material 229 is poured into the mould 219 comprising the edible support structure, as shown in Figure 20. That feed material is then allowed to set or cure until substantially solid. An animal feed supplement 230 comprising animal feed material 220 and a substantially integral edible support structure can then be removed from the mould, and used as required.

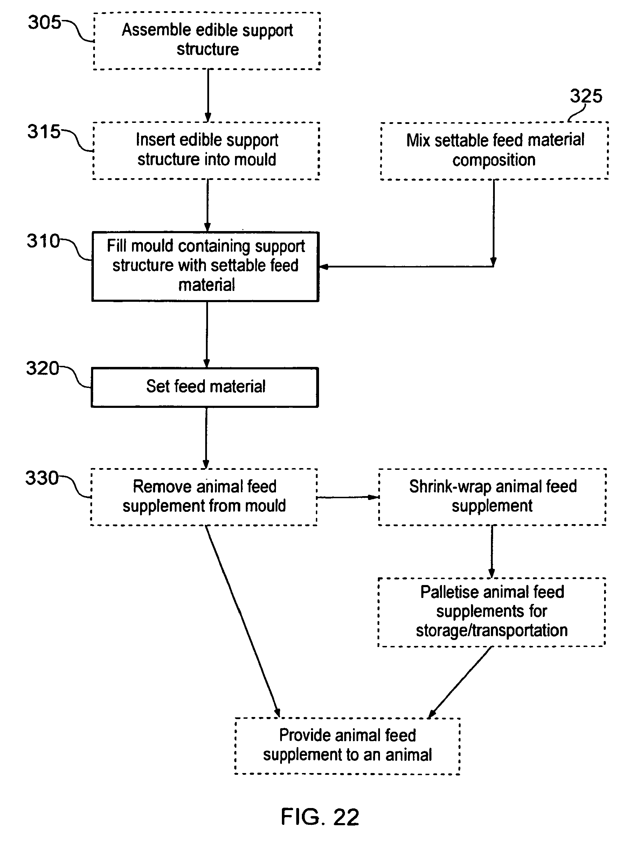

Referring to Figure 22 the steps of a method 300 of manufacturing an animal feed supplement as described herein are set out in more detail. It will be appreciated that some of the steps of the method, for example those bounded by broken lines, are optional.

To manufacture a feed supplement of the type described herein a mould containing an edible support structure is filled with a settable animal feed material as shown in step 310. The mould is filled with a predetermined amount of material. The amount is determined based on the desired volume/weight of the final animal feed supplement. In the examples described above the mould might be arranged to hold between 20 and 25 kg of animal feed material. Alternatively the mould might be much larger, and arranged to hold for example 100 kg of animal feed material. It will be appreciated that moulds of any size might be used, as determined by the requirements of a user.

The mould can be filled using conventional manufacturing equipment, in a known way - the main difference is the provision of the support structure inside the mould. The settable feed composition, for example molasses comprising a desired combination of additional nutrients, may be mixed (325) on site, or may be provided ready mixed.

Prior to this step it may be necessary to assemble the support structure (305), for example if the support structure is one which needs to be assembled from a blank. This step may not be necessary if the support structure is manufactured in a completed form, for example.

The support structure is then inserted into the mould (315). It will be appreciated that the steps of assembling and inserting may take place at a different location from the filling step. For example, moulds might be provided to a manufacturing facility with a removable edible support structure already inserted.

After the mould has been filled with a predetermined amount of material, the material is allowed to set 320. As discussed above, the step of setting the feed material may comprise simply allowing the feed material to cool for a predetermined time, or applying heat to the feed material to cure it, or causing a chemical reaction to take place within the feed material, or a combination of these things. Again, the step of setting the feed material is substantially conventional, the difference being that the feed material is setting to and/or around an edible support structure.

Once the animal feed material has set, an animal feed supplement comprising a block of feed material and an edible support structure may be removed from the mould 330. The removed supplement might then be provided to an animal for consumption, or packaged, stored and/or transported for consumption later, as desired. It will be appreciated that the animal feed supplement could be provided to an animal inside the mould, in the same way as a conventional animal feed supplement, if it is not desired to use the animal feed supplement as a refill for an existing container.

Various modifications may be made without departing from the scope of the invention. For example, it will be appreciated that the edible support structure or edible support structure blank need not be formed from cardboard, but could be formed from any material suitable for animal consumption.

It will be appreciated the edible support structures having different thicknesses or grades of cardboard or paper to those discussed might be used. However, we believe that it is important that the edible support structure is strong enough that the animal feed supplement does not lose its shape over time.

For example, a thin paper liner similar to that shown in Figure 15 might be used, without the internal edible support structure, to produce a feed supplement as a refill for existing containers. However, we have determined through testing that such a product can be unsatisfactory. That is because animal feed supplements are often stored by users, for example farmers, for up to 12 months. A product comprising only a paper liner, and no support structure, does not retain its shape well over such a period, especially when it is stacked with a number of similar products, as shown in Figure 9. Such a product tends to bulge and distort over time, such that it can no longer be fitted inside a container.

Whilst it is possible to provide a feed supplement to an animal without a container, such supplements tend to disintegrate more quickly, for example under the influence of the weather. In addition, animals themselves can consume a supplement more quickly when it is not provided inside a container, because the animals are able to access more than one surface of the supplement at one time, and bite at the supplement, rather than lick it. Thus an animal may consume too much of the supplement in this way. This might pose health problems for the animal, and also may be expensive for the farmer.

We have therefore determined that it is desirable for the liner to provide a support function, as well as a refill function, in order to overcome these problems. Thus the liner should increase the rigidity of an unsupported product, at least in a stacking direction (that is, increase the ability of the product to withstand pressure applied in a direction substantially normal to a surface of the product onto which other items, such as other feed supplements, may be stacked). Preferably the liner should be strong enough that when an animal feed supplement is at the bottom of a stack comprising five such supplements (i.e. having a weight of approximately 100 kg placed on top of it), the feed supplement does not lose its shape.

Where the support is unitary, i.e. formed from a single piece, such a support can be easily assembled, for example by a machine, as no joining or gluing is required. Any such join, if provided, might result in a 'fault line', or line of weakness, along which the final animal feed supplement might break, or through which liquid animal feed material might leak. Therefore a support formed of a single piece of sheet material may be stronger than a multiple piece support.

In addition, the lack of glue, and use only of biodegradable material such as cardboard for the support, results in a product that is not only potentially lower cost (than feed supplements traditionally provided in plastic buckets), but also more sustainable, as less waste is produced.

As discussed above, we have determined that preferably the cardboard used for a liner should be between 1 and 1.5mm thick, and preferably 1.25mm thick, in order to provide the product with suitable support. Thicker support structures might be provided, but where the cardboard is substantially thicker than 1.5 mm, an animal might leave portions of the cardboard uneaten, resulting in some waste which must be disposed of.

It will be appreciated that other shapes and constructions of edible support structure and edible support structure blank to those described might be used. That is because the shape of the edible support structure depends on the shape of the mould into which it is to fit, such that the edible support structure should be shaped to fit inside the mould.

Other edible materials than cardboard might be used, providing the materials are able to provide a suitable support function, as discussed above.

## Claims

1. An animal feed supplement comprising a substantially solid block of feed supplement material and an edible support structure for the feed supplement material, the edible support structure is folded from a substantially circular single piece of sheet material the animal feed supplement is shaped to fit inside a container, so as to provide a refill for that container, the edible support structure comprises a case inside which the block of feed supplement material is held, which case comprises one or more key portions which extend into a body portion of the block of feed supplement material, **characterised in that** the key portions comprise flutes formed in the case, which flutes are formed in a wall of the case, and comprise folds in the wall.

2. An animal feed supplement according to claim 1, wherein the substantially solid block of feed supplement material is formed around the edible support structure or one or more key portions of the edible support structure and may be substantially integral with the edible support structure.

3. An animal feed supplement as claimed in any preceding claim, wherein the substantially solid block of feed supplement material comprises molasses and one or more additional nutrients.

4. An animal feed supplement according to claim 1 wherein the block of feed supplement material is formed around the key portions.

5. An animal feed supplement as claimed in any preceding claim, wherein the edible support structure increases the rigidity of the feed supplement and/or reduces the plasticity of the feed supplement, in comparison to an unsupported block of feed supplement material, and/or increases the ability of the feed supplement to withstand pressure applied in a stacking direction.

6. An animal feed supplement as claimed in any preceding claim, wherein the edible support structure is derived from wood pulp, which may be selected from the group cardboard, paper, fibreboard and paperboard, may be produced using the kraft process and may comprise cardboard having a thickness of between 1 mm and 2mm, and preferably between 1.25mm and 1.5mum, and may have a grade of 125 E.

7. An animal feed supplement as claimed in any preceding claim, wherein the supplement comprises a lid portion, which in use covers at least a portion of an upper surface of the block of food supplement material, which lid portion may be of the same material as the edible support structure and may border the upper surface of the block of food supplement material.

8. A method of manufacturing an animal feed supplement, the supplement being according to any of the preceding claims, the method comprising the steps of:
charging a mould comprising an edible support structure with settable feed supplement material;
setting the feed supplement material to form an animal feed supplement comprising a substantially solid block of feed supplement and an edible support structure; and
discharging the animal feed supplement from the mould.

9. A method according to claim 8, wherein the method includes the step of locating the edible support structure inside the mould, may further include the step of assembling the edible support structure from a blank, which step of assembly may comprise the step of folding the blank along predefined fold lines.

## Patentansprüche

1. Tierfutter-Ergänzungsmittel, welches einen im wesentlichen festen Block aus Futter-Ergänzungsmaterial und eine verzehrbare Trägerstruktur für das Futter-Ergänzungsmaterial umfasst, wobei die verzehrbare Trägerstruktur aus einem im wesentlichen kreisförmigen einzelnen Stück aus Blattmaterial gefaltet ist und das Tierfutter-Ergänzungsmittel derart geformt ist, dass es in einen Behälter hineinpasst, um eine Nachfüllung für den Behälter bereitzustellen, wobei die verzehrbare Trägerstruktur ein Fach aufweist, in dessen Innern der Block aus Futter-Ergänzungsmaterial gehalten wird, wobei das Fach einen oder mehrere Keilabschnitte aufweist, welche sich in einen Körperabschnitt des Blocks aus Futter-Ergänzungsmaterial erstrecken, **dadurch gekennzeichnet, dass** die Keilabschnitte in dem Fach gebildete Auskehlungen aufweisen, welche in der Wand des Faches gebildet sind und Falten in der Wand aufweisen.

2. Tierfutter-Ergänzungsmittel nach Anspruch 1, bei welchem der im wesentlichen feste Block aus Futter-Ergänzungsmaterial um die verzehrbare Trägerstruktur herum oder um einen oder mehrere Keilabschnitte der verzehrbaren Trägerstruktur herum gebildet ist und mit der verzehrbaren Trägerstruktur im wesentlichen einstückig ist.

3. Tierfutter-Ergänzungsmittel nach einem der vorhergehenden Ansprüche, bei welchem der im wesentlichen feste Block aus Futter-Ergänzungsmaterial Melasse und einen oder mehrere zusätzliche Nährstoffe aufweist.

4. Tierfutter-Ergänzungsmittel nach Anspruch 1, bei welchem der Block aus Futter-Ergänzungsmaterial um die Keilabschnitte herum gebildet ist.

5. Tierfutter-Ergänzungsmittel nach einem der vorhergehenden Ansprüche, bei welchem die verzehrbare Trägerstruktur im Vergleich mit einem trägerfreien Block aus Futter-Ergänzungsmaterial die Steifigkeit des Futter-Ergänzungsmittels erhöht und/oder die Plastizität des Futter-Ergänzungsmittels verringert und/oder die Fähigkeit des Futter-Ergänzungsmittels, einem in einer Stapelrichtung einwirkenden Druck zu widerstehen, erhöht.

6. Tierfutter-Ergänzungsmittel nach einem der vorhergehenden Ansprüche, bei welchem die verzehrbare Trägerstruktur aus Holzstoff bzw. Zellstoff abgeleitet ist, welcher aus der Gruppe Karton, Papier, Faserplatte und Pappe ausgewählt ist, welcher unter Verwendung des Kraftverfahrens hergestellt werden kann und welcher Karton eine Dicke von 1 mm bis 2 mm und vorzugsweise von 1,25 mm bis 1,5 mm aufweisen kann und einen Grad von 125 E haben kann.

7. Tierfutter-Ergänzungsmittel nach einem der vorhergehenden Ansprüche, bei welchem das Ergänzungsmittel einen Deckelabschnitt aufweist, welcher bei seiner Verwendung zumindest einen Teil einer oberen Fläche des Blocks aus Futter-Ergänzungsmaterial abdeckt, wobei der Deckelabschnitt aus demselben Material wie die verzehrbare Trägerstruktur bestehen kann und an die obere Fläche des Blocks aus Futter-Ergänzungsmaterial angrenzen kann.

8. Verfahren zum Herstellen eines Tierfutter-Ergänzungsmittels, welches gemäss einem der vorhergehenden Ansprüche ausgestaltet sein kann, wobei das Verfahren die folgenden Schritte aufweist:
Befüllen einer Form, welche eine verzehrbare Trägerstruktur aufweist, mit einem verfestigbaren Futter-Ergänzungsmaterial;
Verfestigen des Futter-Ergänzungsmaterials, um ein Tierfutter-Ergänzungsmittel zu bilden, welches einen im wesentlichen festen Block aus Futter-Ergänzungsmaterial und eine verzehrbare Trägerstruktur aufweist; und
Entfernen des Tierfutter-Ergänzungsmittels aus der Form.

9. Verfahren nach Anspruch 8, bei welchem das Verfahren einen Schritt zum Anordnen der verzehrbaren Trägerstruktur im Innern der Form aufweist und ausserdem einen Schritt zum Zusammensetzen der verzehrbaren Trägerstruktur aus einen Rohmaterial aufweisen kann, wobei der Schritt des Zusammensetzens einen Schritt zum Falten des Rohmaterials entlang vorbestimmter Faltlinien aufweisen kann.

## Revendications

1. Complément alimentaire pour animaux comprenant un bloc sensiblement solide de matière de complément alimentaire et une structure de support comestible pour la matière de complément alimentaire, la structure de support comestible est pliée à partir d'un morceau unique sensiblement circulaire de matière en feuille, le complément alimentaire pour animaux est mis en forme pour s'insérer à l'intérieur d'un récipient, de manière à réaliser une recharge pour ce récipient, la structure de support comestible comprend un boîtier à l'intérieur duquel le bloc de matière de complément alimentaire est maintenu, lequel boîtier comprend une ou plusieurs parties clés qui s'étendent dans une partie de corps du bloc de matière de complément alimentaire, **caractérisé en ce que** les parties clés comprennent des cannelures formées dans le boîtier, lesquelles cannelures sont formées dans une paroi du boîtier, et comprennent des plis dans la paroi.

2. Complément alimentaire pour animaux selon la revendication 1, dans lequel le bloc sensiblement solide de matière de complément alimentaire est formé autour de la structure de support comestible ou une ou plusieurs parties clés de la structure de support comestible et peut être sensiblement d'un seul tenant avec la structure de support comestible.

3. Complément alimentaire pour animaux selon l'une quelconque des revendications précédentes, dans lequel le bloc sensiblement solide de matière de complément alimentaire comprend des mélasses et un ou plusieurs nutriments supplémentaires.

4. Complément alimentaire pour animaux selon la revendication 1, dans lequel le bloc de matière de complément alimentaire est formé autour des parties clés.

5. Complément alimentaire pour animaux selon l'une quelconque des revendications précédentes, dans lequel la structure de support comestible augmente la rigidité du complément alimentaire et/ou réduit la plasticité du complément alimentaire, en comparaison à un bloc non supporté de matière de complément alimentaire, et/ou augmente la capacité du complément alimentaire à supporter la pression appliquée dans une direction d'empilage.

6. Complément alimentaire pour animaux selon l'une quelconque des revendications précédentes, dans lequel la structure de support comestible est dérivée de pâte à papier, qui peut être sélectionnée dans le groupe contenant du carton, du papier, de la fibre de bois et du papier carton, peut être produite en utilisant le procédé kraft et peut comprendre du carton ayant une épaisseur entre 1 mm et 2 mm, et de préférence entre 1,25 mm et 1,5 mm, et peut être de qualité 125E.

7. Complément alimentaire pour animaux selon l'une quelconque des revendications précédentes, dans lequel le complément comprend une partie de couvercle, qui, en utilisation, couvre au moins une partie d'une surface supérieure du bloc de matière de complément alimentaire, laquelle partie de couvercle peut être constituée de la même matière que la structure de support comestible et peut border la surface supérieure du bloc de matière de complément alimentaire.

8. Procédé de fabrication d'un complément alimentaire pour animaux, le complément étant selon l'une quelconque des revendications précédentes, le procédé comprenant les étapes :
de chargement d'un moule comprenant une structure de support comestible avec une matière de complément alimentaire durcissable ;
de durcissement de la matière de complément alimentaire pour former un complément alimentaire pour animaux comprenant un bloc sensiblement solide de complément alimentaire et une structure de support comestible ; et
de déchargement du complément alimentaire comestible du moule.

9. Procédé selon la revendication 8, dans lequel le procédé comprend l'étape de positionnement de la structure de support comestible à l'intérieur du moule, peut en outre comprendre l'étape d'assemblage de la structure de support comestible à partir d'une ébauche, laquelle étape d'assemblage peut comprendre l'étape de pliage de l'ébauche le long de lignes de pliage prédéfinies.
